# DEMANDE DE BREVET EUROPEEN

(11) **EP 0 928 055 A1**
(43) Date de publication de la demande: **07.07.1999**
(21) Numéro de dépôt: 98403051.0
(22) Date de dépôt: 04.12.1998
(51) Int. Cl.: H02J 9/06, G08B 29/12, G08B 26/00

(54) **Procédé de contrôle centralisé à distance d'une pluralité de blocs d'éclairage de sécurité et installation d'éclairage de secours mettant en oeuvre le procédé**

(30) Priorité: 08.12.1997 FR 9715457
(71) Demandeur: LEGRAND, 87045 Limoges (FR); LEGRAND SNC, F-87045 Limoges (FR)
(72) Inventeur: Guillon, Laurent, 87100 Limoges (FR)
(74) Mandataire: CABINET BONNET-THIRION

(57) **Abrégé**

Procédé et installation de contrôle à distance des blocs d'éclairage de sécurité d'une installation d'éclairage de secours.

Chaque bloc d'éclairage (BES-1 ... BES-N) est équipé d'un modem de liaison pour l'échange d'informations avec une unité centrale (11) reliée à tous les modems par une même ligne (13) et on alimente et exploite ces modems séquentiellement et périodiquement suivant un ordre d'adressage prédéterminé.

La même ligne peut en outre être utilisée pour transmettre un signal de télécommande d'allumage de tous les blocs et/ou un signal de télécommande d'extinction de tous les blocs.

## Description

L'invention se rapporte à un procédé de contrôle centralisé à distance d'une ou plusieurs fonctions d'une pluralité de blocs d'éclairage de sécurité répartis dans un local ou groupe de locaux, permettant de vérifier périodiquement si tel ou tel bloc d'éclairage de sécurité, faisant partie d'une même installation, se trouve dans un état anormal ou comporte un composant défectueux.

L'invention vise un perfectionnement permettant d'assurer toutes ces fonctions à distance sans compliquer le câblage électrique des blocs d'éclairage de sécurité et notamment sans rajouter de câbles aux installations existantes.

Dans les locaux professionnels ou recevant du public, la mise en place de blocs d'éclairage de sécurité pour signaler les issues est obligatoire. Cependant, il est nécessaire de vérifier périodiquement le bon état de marche de ces blocs d'éclairage. Chaque bloc d'éclairage est relié au secteur et comporte au moins un accumulateur. Les différents blocs sont reliés au réseau de distribution de courant alternatif et restent éteints (à l'exception d'une veilleuse) tant que la tension est présente sur le réseau. Si celle-ci disparaît, une ou des lampes d'éclairage de secours s'allument et restent alimentées par l'accumulateur, pendant un certain temps. Typiquement, l'autonomie doit être d'une heure. Comme, en principe, ces blocs d'éclairage de sécurité n'entrent en action que rarement, leur état doit être contrôlé périodiquement. Il existe des tests normalisés permettant de vérifier les principales fonctions d'un bloc d'éclairage de sécurité. A titre d'exemple, on peut citer:
- un test pour vérifier le bon fonctionnement du circuit de charge de l'accumulateur,
- un test pour vérifier le bon fonctionnement des moyens de commutation et le bon état des lampes permettant d'allumer la lampe d'éclairage au moment voulu,
- un test d'autonomie consistant à faire subir à la batterie une décharge complète à intensité nominale (devant durer une heure) suivie d'une recharge pendant douze heures.

Actuellement, chaque bloc d'éclairage de sécurité comporte un circuit électronique, sous forme d'un circuit intégré, qui permet de mettre en oeuvre cette série de tests pour chaque bloc considéré. Autrement dit, chaque bloc d'éclairage de sécurité se teste indépendamment de ses voisins. Si des anomalies sont détectées, des diodes électroluminescentes ou analogues, de différentes couleurs, fixes ou clignotantes, permettent d'identifier le défaut. L'inconvénient de ce système réside dans le fait qu'une personne doit parcourir tous les locaux, régulièrement, pour relever les indications affichées par tous les blocs d'éclairage.

L'invention a pour but, à la fois de gérer la périodicité des tests et leur mise en oeuvre à partir d'un poste de contrôle centralisé et de reporter les résultats des tests à ce même poste de contrôle, afin d'éviter qu'une personne ait à circuler dans les locaux pour vérifier les résultats des tests sur chaque bloc d'éclairage de sécurité.

Il est à noter que la mise en oeuvre d'un tel contrôle centralisé résout aussi un autre problème qui est la nécessité de tenir à jour un registre de sécurité constituant une sorte d'historique des éventuelles défaillances de l'installation. Actuellement, ce registre est tenu à jour après chaque ronde de la personne chargée de vérifier les blocs d'éclairage de sécurité. Grâce à l'invention, il est facile de compléter la centrale pour que ce registre puisse être établi plus facilement, voire automatiquement.

Dans une installation classique, chaque bloc est, comme on l'a dit, relié au réseau de distribution de courant alternatif, pour pouvoir scruter une éventuelle disparition de tension et commander l'allumage de l'éclairage de secours. De plus, tous les blocs sont reliés à une même ligne de télécommande à distance comprenant deux fils, sur lesquels on applique des niveaux de tension continu.

Plus particulièrement, si la tension appliquée est de +9 volts, on provoque l'allumage de tous les blocs d'éclairage en même temps. Si la tension appliquée est de -9 volts, on provoque l'extinction volontaire de tous les blocs. Ceci peut être nécessaire en cas de coupure volontaire du réseau de distribution de courant alternatif, par exemple le soir, à la fermeture d'un magasin, pour éviter la décharge de l'ensemble des accumulateurs à un moment où plus personne n'est, en principe, présent dans les locaux.

L'invention permet notamment d'utiliser ces deux fils de télécommande pour réaliser tous les tests à distance et centraliser les réponses.

Selon un aspect de l'invention, chaque bloc d'éclairage de sécurité est complété par un modem de liaison susceptible d'échanger des informations avec l'unité centrale, cette dernière étant reliée par la ligne bifilaire précitée à tous les modems. Ceux-ci peuvent donc transmettre des instructions émises par l'unité centrale et les concernant spécifiquement, pour faire exécuter tel ou tel test dans le bloc d'éclairage de sécurité concerné. Cependant, un modem de ce genre consomme une certaine énergie électrique. Par conséquent, si on considère le nombre de blocs d'éclairage de sécurité reliés à la même unité centrale, les deux fils, de relativement faible section, de la ligne de télécommande à distance réutilisée pour l'interconnexion des modems ne peuvent transmettre l'énergie électrique suffisante à tous les modems. Il est en effet important que les modems soient alimentés extérieurement et non par l'accumulateur intégré au bloc d'éclairage de sécurité, lequel doit être essentiellement consacré à l'éclairage de secours. Il faut en outre pouvoir opérer et notamment faire ces tests, même lorsque le réseau de distribution de courant électrique alternatif est coupé, sans avoir à puiser l'énergie sur l'accumulateur. Par conséquent, l'énergie électrique nécessaire à la mise en oeuvre des procédures de test doit pouvoir être acheminée par l'intermédiaire de cette ligne bifilaire classiquement utilisée pour la télécommande à distance de l'allumage et de l'extinction des blocs d'éclairage, dans leur ensemble.

L'invention permet de surmonter toutes ces difficultés.

En premier lieu, l'invention concerne un procédé de contrôle centralisé à distance d'une ou plusieurs fonctions d'une pluralité de blocs d'éclairage de sécurité répartis dans un local ou un groupe de locaux, caractérisé en ce que, chaque bloc étant équipé d'un modem de liaison susceptible d'échanger des informations avec une unité centrale reliée à tous les modems par une même ligne, on transmet sur ladite ligne à la fois l'énergie électrique nécessaire à l'alimentation d'au moins un modem et des informations de commande de test et en ce qu'on alimente et exploite lesdits modems desdits blocs séquentiellement et périodiquement suivant un ordre d'adressage prédéterminé géré par ladite unité centrale.

On initialise la procédure de test de tous les blocs par l'émission, sur la ligne, d'un signal de télécommande de procédure de test. Ce signal peut consister en une inversion de polarité de la tension d'alimentation transmise par la ligne, pendant un intervalle de temps prédéterminé. Il en est de même pour transmettre sur la ligne un signal de télécommande d'allumage de tous les blocs et un signal de télécommande d'extinction de tous les blocs. Typiquement, l'initialisation de la procédure de test valable pour tous les blocs se fait sur inversion de polarité de la tension d'alimentation pendant une première durée prédéterminée, par exemple de l'ordre de une seconde. Le signal de télécommande d'allumage de tous les blocs, peut consister en une inversion de polarité d'une autre durée prédéterminée, par exemple de l'ordre de 2 secondes. Le signal de télécommande d'extinction de tous les blocs, peut consister en une inversion de polarité d'une autre durée prédéterminée, par exemple de l'ordre de 3 secondes. Autrement dit, le signal de télécommande de procédure de test, le signal de télécommande d'allumage et le signal de télécommande d'extinction sont des créneaux de tension continue, de durées différentes prédéterminées.

La tension continue qui est appliquée entre les deux fils électriques de la ligne de télécommande provient d'une source d'énergie électrique située dans l'unité centrale et propre à alimenter au moins un modem. En fait, chaque bloc d'éclairage de sécurité se voit attribuer un code représentatif d'un ordre d'adressage et un processeur ou microcontrôleur, constituant une sorte d'interface entre le modem et le circuit intégré d'élaboration des tests, est connecté à la ligne pour percevoir le signal de télécommande de procédure de test.

Suivant son code d'adressage, le microcontrôleur est capable d'autoriser l'alimentation électrique du modem correspondant au bout d'un intervalle de temps prédéterminé après l'émission du signal de télécommande de procédure de test, en fonction de l'ordre qui lui est affecté par le code d'adressage géré par l'unité centrale. Par conséquent, le modem de chaque bloc de sécurité est alimenté avec un retard prédéterminé après l'émission dudit signal de télécommande de procédure de test, ce retard étant spécifique du bloc de sécurité. A partir du moment où le modem est alimenté, le microcontrôleur lui alloue une période de fonctionnement prédéterminée suffisante pour recevoir les messages de l'unité centrale et pour renvoyer à l'unité centrale un certain nombre d'informations constituant les réponses de ces tests ou des réponses à des tests plus longs initialisés au cours de cycles antérieurs.

L'invention concerne également une installation d'éclairage de secours du type comprenant une pluralité de blocs d'éclairage de sécurité répartis dans un local ou un groupe de locaux, lesdits blocs étant reliés par une même ligne à une unité centrale de commande et de contrôle, caractérisée en ce que chaque bloc d'éclairage de sécurité comporte:
- des moyens de test d'au moins une fonction, susceptibles d'élaborer un message correspondant,
- un modem pour transmettre ledit message sur ladite ligne vers ladite unité centrale,
- des moyens de commande pour alimenter ledit modem pendant un intervalle de temps donné et à un moment prédéterminé, spécifique dudit bloc de sécurité, au cours d'un cycle de contrôle déclenché par ladite unité centrale,
et en ce que ladite unité centrale comporte:
- des moyens d'alimentation électrique connectés à ladite ligne pour appliquer à cette dernière une tension continue propre à fournir une énergie électrique suffisante pour au moins alimenter l'un des modems et des moyens pour transmettre sur ladite ligne un signal de télécommande de procédure de test.

Les moyens pour transmettre sur la ligne un signal de télécommande de procédure de tests comportent, dans l'unité centrale de commande et de contrôle, un générateur de créneaux de tension continue. Ce générateur peut consister en un circuit d'inversion de polarité des moyens d'alimentation électrique. Un tel circuit d'inversion est commandé pendant un intervalle de temps prédéterminé par des moyens de pilotage qui permettent de déterminer la durée caractéristique du créneau de tension continue, en l'occurrence ici de l'inversion de tension. Les mêmes moyens de pilotage permettent de commander le circuit d'inversion de polarité pendant un deuxième intervalle de temps, constituant un signal de télécommande d'allumage généralisé des blocs d'éclairage et/ou pendant un troisième intervalle de temps prédéterminé représentant un signal de télécommande d'extinction généralisée des blocs d'éclairage de sécurité. Le microcontrôleur ou processeur lorsqu'il perçoit une inversion de polarité de durée correspondant à une procédure de tests, pilote un moyen interrupteur, comme par exemple un transistor, pour alimenter le modem correspondant en énergie électrique délivré par la ligne. Ce microcontrôleur ou processeur est programmé pour piloter le moyen interrupteur pendant une durée prédéterminée et après un retard prédéterminé par l'unité centrale spécifique au bloc d'éclairage de sécurité dans lequel il est intégré, ceci afin que les modems ne soient pas tous alimentés en même temps.

L'invention sera mieux comprise et d'autres avantages de celle-ci apparaîtront plus clairement à la lumière de la description qui va suivre d'une installation d'éclairage de secours conforme à son principe, donnée uniquement à titre d'exemple et faite en référence aux dessins annexés dans lesquels:
- la figure 1 est un schéma de principe de l'installation;
- la figure 2 est un schéma électrique d'un circuit d'inversion de polarité commandé, intégré à l'unité centrale de commande et de contrôle; et
- la figure 3 est un schéma de principe des principaux sous-ensembles d'un bloc d'éclairage de sécurité équipé pour la mise en oeuvre de l'invention.

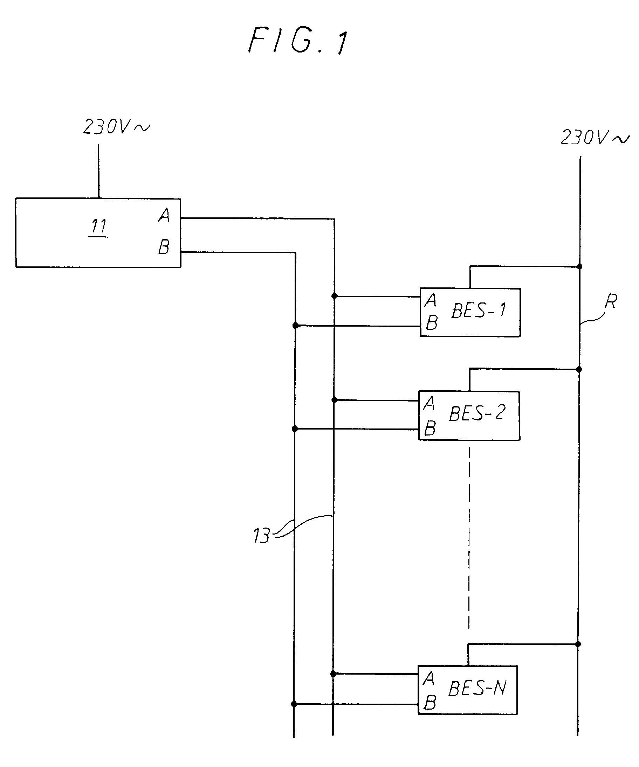

Sur la figure 1, on a représenté l'ensemble d'une installation d'éclairage de secours, comprenant une pluralité de blocs d'éclairage de sécurité BES-1, BES-2, BES-N répartis dans un local ou un groupe de locaux et une unité centrale de commande et de contrôle 11. Les blocs sont reliés par une même ligne bifilaire 13 à l'unité centrale de commande et de contrôle. Par ailleurs, chaque bloc est connecté au réseau de distribution de courant alternatif R pour "surveiller" une présence effective de tension sur ce réseau, la disparition de la tension entraînant l'allumage d'une lampe électrique située dans le bloc d'éclairage de sécurité. Cette lampe est alimentée par un accumulateur électrochimique, par exemple du type cadmium-nickel lui-même logé dans le bloc d'éclairage. Ce dernier est classiquement disposé à un endroit choisi du local pour signaler une issue d'évacuation ou éclairer une zone. La connexion entre la lampe d'éclairage et l'accumulateur électrochimique se fait par l'intermédiaire d'un commutateur commandé par un système ou circuit sensible à la disparition de la tension du réseau de distribution de courant alternatif R.

La structure générale d'un tel bloc d'éclairage de sécurité est connue et ne sera donc pas décrite plus en détail.

L'unité centrale de commande et de contrôle 11 renferme des moyens 12 pour émettre séquentiellement des signaux de commande de tests perceptibles par les différents blocs d'éclairage et pour recevoir des signaux émis en réponse par des circuits spécialisés des différents blocs d'éclairage de sécurité. Un code spécifique est affecté à chaque bloc d'éclairage ; ce code est représentatif d'un ordre d'adressage prédéterminé géré par l'unité centrale 11.

Dans l'exemple représenté, l'unité centrale est normalement prévue pour appliquer une tension continue, ici de 12 volts, entre les deux conducteurs de la ligne bifilaire reliée à tous les blocs d'éclairage de sécurité. Par exemple, on peut considérer qu'une tension de +12 volts est normalement disponible sur la borne A, la borne B étant le potentiel de référence. La source de tension U constitue une source d'énergie électrique calculée pour pouvoir transmettre sur la ligne bifilaire 13 l'énergie électrique nécessaire à l'alimentation d'au moins l'un des modems de l'un quelconque des blocs d'éclairage de sécurité.

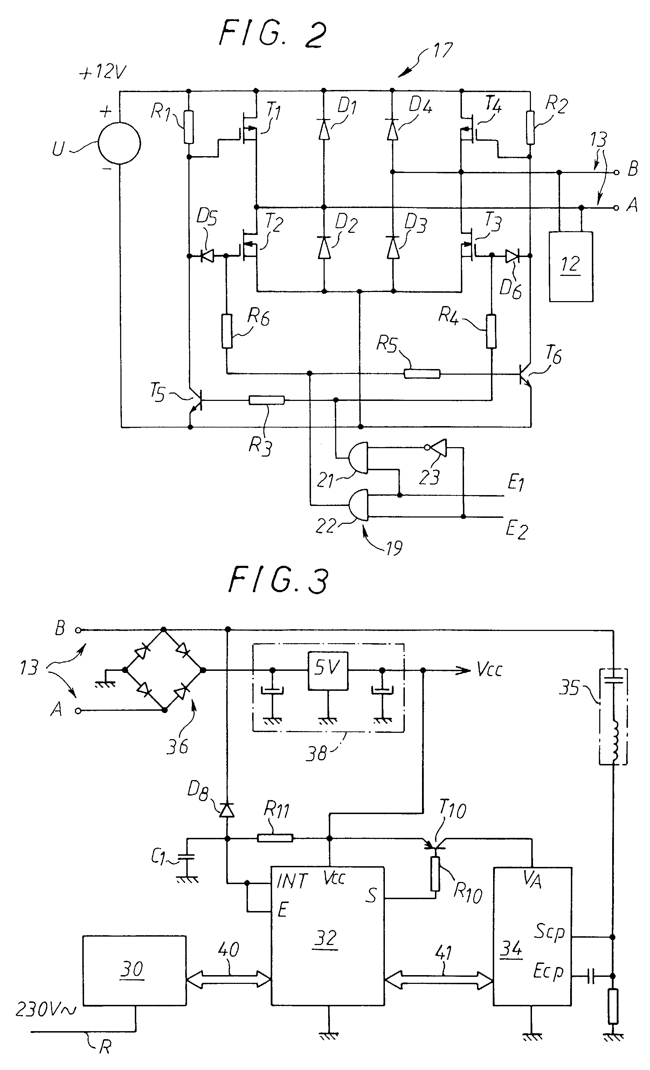

Typiquement, il est rappelé qu'un tel modem consomme 30 milliampères en réception et 60 milliampères en émission. Par conséquent, une source de tension capable de délivrer 100 milliampères peut être suffisante, compte tenu des pertes en ligne. Cette source de tension U n'est pas directement connectée aux bornes de sortie A et B de l'unité centrale. Comme le montre la figure 2, un circuit d'inversion de polarité 17 est connecté entre la source de tension U et les bornes de sortie A et B. Ce circuit d'inversion de polarité comporte quatre transistors MOS ; les transistors T₁ et T₄ sont des transistors MOS du type canal P et des transistors T₂ et T₃ sont des transistors MOS du type canal N. Les transistors T₁ et T₂ ont leurs liaisons drain-source en série aux bornes de la source de tension U. Il en est de même des transistors T₄ et T₃. Des diodes D₁-D₄ sont connectées en parallèle, respectivement, sur les jonctions drain-source des transistors T₁-T₄ pour les protéger. Une branche série constituée d'une résistance R₁ et d'un transistor T₅ est connectée aux bornes de la source de tension U. Le point commun entre la résistance R₁ et le transistor T₅ est relié à la grille du transistor T₁ et à la grille du transistor T₂ par l'intermédiaire d'une diode D₅.

Une branche série constituée d'une résistance R₂ et d'un transistor T₆ est connectée aux bornes de la source de tension U, de 12 volts. Le point commun entre cette résistance et ce transistor est connecté à la grille du transistor T₄ et à la grille du transistor T₃ par l'intermédiaire d'une diode D₆. Un circuit de commande d'inversion de polarité 19 comprend deux portes de type ET 21, 22 et un inverseur 23. La sortie de la porte 21 est reliée à la base du transistor T₅ par l'intermédiaire d'une résistance R₃ et à la grille du transistor T₃ par l'intermédiaire d'une résistance R₄. La sortie de la porte 22 est reliée à la base du transistor T₆ par l'intermédiaire d'une résistance R₅ et à la grille du transistor T₂ par l'intermédiaire d'une résistance R₆. L'inverseur 23 est connecté entre une entrée de la porte 21 et une entrée de la porte 22. Les deux autres entrées respectives des deux portes 21, 22 sont connectées en commun et constituent une entrée de commande E₁ tandis que l'entrée de l'inverseur connecté à l'autre entrée de la porte 22 constitue une entrée de commande E₂. Les deux diodes D₅, D₆ connectées aux grilles des transistors T₂ et T₃ empêchent une conduction simultanée des transistors T₁ et T₂ d'une part et T₃ et T₄ d'autre part. Suivant les niveaux 0 ou 1 appliqués aux entrées E₁ et E₂, on obtient les états suivants:
- E₁ = 0 : aucune alimentation n'est disponible sur la ligne bifilaire 13
- E₁ = 1 : l'alimentation 12 volts est disponible sur la ligne bifilaire, entre les bornes A et B mais son sens dépend du niveau logique appliqué à l'entrée E₂.

Si E₂ = 1, la borne B est à +12 volts, si E₂ = 0, la borne B est à -12 volts. Par conséquent, selon le signal logique de commande appliqué à l'entrée E₂, on peut inverser la polarité de la tension de 12 volts disponible entre les bornes A et B.

Comme indiqué précédemment, si cette inversion de polarité dure environ une seconde, elle est interprétée comme un signal de télécommande de procédure de test. Si l'inversion de polarité dure environ 2 secondes, elle est interprétée comme un signal de télécommande d'allumage de tous les blocs d'éclairage de sécurité et si l'inversion de polarité dure environ 3 secondes, elle est interprétée comme un signal de télécommande d'extinction de tous les blocs.

On va maintenant décrire, en référence à la figure 3, les principaux sous-ensembles d'un bloc d'éclairage de sécurité, équipé des moyens permettant de mettre en oeuvre l'invention.

Sur ce schéma est représenté l'un des blocs d'éclairage de sécurité de la figure 1. Il comporte notamment un sous-ensemble d'éclairage autonome 30, un processeur ou microcontrôleur 32 et un modem 34. Le sous-ensemble d'éclairage 30 regroupe pratiquement tous les éléments d'un bloc d'éclairage de sécurité classique, c'est-à-dire notamment le circuit d'éclairage constitué d'une lampe, d'un accumulateur électrochimique et d'un commutateur commandé par l'absence de tension sur le réseau de distribution R. Il comporte aussi un circuit de charge de l'accumulateur et des moyens pour contrôler diverses fonctions et paramètres vitaux de cet ensemble, tel que le bon état de la lampe, la capacité de la batterie, le bon fonctionnement du commutateur, etc... Il comporte à cet effet un circuit intégré spécialisé mentionné ci-dessus, permettant d'effectuer ces tests et de mémoriser les résultats. Cet ensemble est connu et ne sera pas décrit plus en détail.

Cependant, le circuit intégré mentionné est dorénavant sous le contrôle du processeur 32 dont la fonction est de mettre en service le modem 34 à un moment donné et pendant un intervalle de temps prédéterminé et d'organiser les transferts d'informations entre le sous-ensemble d'éclairage 30 et l'unité centrale 11. Ces transmissions de données sont effectuées par une liaison par courant porteur sur la ligne 13.

Pour les installations existantes, cette ligne n'a pas à être installée, puisque, comme on l'a vu, il suffit de reprendre les deux conducteurs qui servaient ordinairement à la télécommande à distance. L'entrée Ecp et la sortie Scp du modem 34 permettent les échanges d'informations avec la ligne 13 par l'intermédiaire d'un filtre self-capacité 35 à 97 kHz.

Par ailleurs, un pont de redressement de quatre diodes 36 est connecté aux conducteurs A et B de la ligne 13, d'une part et à un circuit de régulation de tension continue 38, capable de délivrer une tension d'alimentation interne Vcc de 5 volts. Cette tension permet d'alimenter le processeur 32 en veille ou en activité et le modem 34, lorsque celui-ci doit être mis en service sous le contrôle du processeur 32. Pour ce faire, ce dernier comporte une sortie s reliée par l'intermédiaire d'une résistance R₁₀ à la base d'un transistor T₁₀ dont la liaison émetteur collecteur est reliée entre la borne Vcc et la borne d'alimentation V_{A} du modem.

D'autre part, le processeur comporte une entrée INT et une entrée E de signal de commande, toutes deux connectées au conducteur B de la ligne 13 par l'intermédiaire d'une diode D₈. La tension Vcc est par ailleurs appliquée à la borne d'alimentation du processeur et aux deux entrées précitées par l'intermédiaire d'une branche résistance-capacité, la cathode de la diode D₈ étant connectée au point commun de la résistance R₁₁ et du condensateur C₁ et aux deux entrées INT et E. Les échanges de données et d'instructions se font par une liaison 40 entre le sous-ensemble d'éclairage 20 et le processeur 32 et par une liaison 41 entre le processeur 32 et le modem 34.

Le fonctionnement est le suivant. Lorsque les entrées E₁ et E₂ du circuit 19 sont toutes deux à 1 (figure 2) le processeur est en veille et ne consomme donc aucune énergie électrique ; sa sortie s est à 0, de sorte qu'il bloque l'alimentation électrique du modem 34, le transistor T₁₀ étant bloqué. Si l'entrée E₂ passe à 0, le circuit d'inversion de polarité 17 dans l'unité centrale provoque une inversion de tension entre les deux conducteurs de la ligne 13. Cette inversion est perçue par l'entrée INT du processeur 32 via la diode D₈. Dans le même temps, le processeur décode le signal d'inversion par l'entrée E, c'est-à-dire qu'il détermine la durée de celui-ci.

Si le signal d'inversion de polarité dure 1 seconde, cela signifie qu'une procédure de tests est initialisée par l'unité centrale 11. Dans ce cas, le processeur "récupère" un certain nombre d'informations disponibles au niveau du bloc d'éclairage 30 et commence à décompter un certain temps avant d'alimenter le modem 34 (signal de commande sur la sortie s et saturation du transistor T₁₀) ce temps dépendant de l'adresse du bloc de sécurité. Le temps d'alimentation du modem dure environ 0,5 seconde. Pendant cette période, le processeur reçoit du modem un message provenant de l'unité centrale concernant les tests ou opérations à effectuer sur le bloc d'éclairage et transmet ses réponses. A la fin de ce dialogue, le processeur coupe l'alimentation du modem et repasse en veille.

Il est à noter que pendant toute cette période de fonctionnement, la tension Vcc disponible à la sortie du régulateur 38 reste constante en dépit de l'inversion de polarité, en raison de la présence du pont redresseur 36.

Si l'inversion de polarité dure 2 secondes, le processeur commande, sans retard, l'allumage du bloc d'éclairage correspondant. Par conséquent, tous les blocs de l'installation s'allument.

Si on coupe volontairement le réseau d'alimentation de courant alternatif, les blocs s'allument (secours). Une inversion de polarité de trois secondes permet au processeur de commander l'extinction forcée du bloc d'éclairage 30 et par conséquent tous les blocs s'éteignent.

## Revendications

1. Procédé de contrôle centralisé à distance d'une ou plusieurs fonctions d'une pluralité de blocs d'éclairage de sécurité (BES-1 ...BES-N) répartis dans un local ou un groupe de locaux, caractérisé en ce que, chaque bloc étant équipé d'un modem de liaison (34) susceptible d'échanger des informations avec une unité centrale (11) reliée à tous les modems par une même ligne (13), on transmet sur ladite ligne à la fois l'énergie électrique nécessaire à l'alimentation d'au moins un modem et des informations de commande de test et en ce qu'on alimente (T₁₀) et exploite lesdits modems (34) desdits blocs séquentiellement et périodiquement suivant un ordre d'adressage prédéterminé géré par ladite unité centrale.

2. Procédé selon la revendication 1, caractérisé en ce qu'il consiste à utiliser la même ligne (13) pour transmettre en outre un signal de télécommande d'allumage de tous les blocs et/ou un signal de télécommande d'extinction de tous les blocs.

3. Procédé selon la revendication 1 ou 2, caractérisé en ce qu'on initialise une procédure de test de tous les blocs par l'émission, sur ladite ligne (13), d'un signal de télécommande de procédure de test.

4. Procédé selon l'ensemble des revendications 2 et 3, caractérisé en ce que ledit signal de télécommande d'allumage, ledit signal de télécommande d'extinction et ledit signal de télécommande de procédure de test sont des créneaux de tension continue de durées différentes prédéterminées.

5. Procédé selon la revendication 4, caractérisé en ce qu'on crée un tel créneau de tension précité en inversant (17), pendant un intervalle de temps correspondant, la polarité d'une tension continue (U) normalement appliquée à ladite ligne (13).

6. Procédé selon la revendication 5, caractérisé en ce que ladite tension continue est délivrée par une source d'énergie électrique (U) propre à alimenter un modem correspondant.

7. Procédé selon l'une des revendications 3 à 6, caractérisé en ce qu'il consiste à alimenter le modem (34) de chaque bloc de sécurité avec un retard prédéterminé après l'émission dudit signal de télécommande de procédure de test, ledit retard étant spécifique dudit bloc de sécurité.

8. Installation d'éclairage de secours du type comprenant une pluralité de blocs d'éclairage de sécurité (BES-1 ... BES-N) répartis dans un local ou un groupe de locaux, lesdits blocs étant reliés par une même ligne (13) à une unité centrale de commande et de contrôle (11), caractérisée en ce que chaque bloc d'éclairage de sécurité comporte:
- des moyens de test (30, 32) d'au moins une fonction, susceptibles d'élaborer un message correspondant,
- un modem (34) pour transmettre ledit message sur ladite ligne vers ladite unité centrale,
- des moyens de commande (32, T₁₀) pour alimenter ledit modem pendant un intervalle de temps donné et à un moment prédéterminé, spécifique dudit bloc de sécurité, au cours d'un cycle de contrôle déclenché par ladite unité centrale,
et en ce que ladite unité centrale comporte:
- des moyens d'alimentation électrique (U) connectés à ladite ligne (13) pour appliquer à cette dernière une tension continue propre à fournir une énergie électrique suffisante pour au moins alimenter l'un des modems et des moyens (17) pour transmettre sur ladite ligne un signal de télécommande de procédure de tests.

9. Installation selon la revendication 8, caractérisée en ce que lesdits moyens pour transmettre sur ladite ligne un signal de télécommande de procédure de test comportent un générateur de créneau de tension continue (17).

10. Installation selon la revendication 9, caractérisée en ce que ledit générateur de créneau de tension continue comporte un circuit d'inversion de polarité (17) desdits moyens d'alimentation électrique (U), commandé pendant un premier intervalle de temps prédéterminé par des moyens de pilotage (19).

11. Installation selon la revendication 10, caractérisée en ce que lesdits moyens de pilotage (19) sont aptes à commander ledit circuit d'inversion de polarité pendant un deuxième intervalle de temps prédéterminé représentant un signal de télécommande d'allumage généralisé des blocs d'éclairage et/ou pendant un troisième intervalle de temps prédéterminé représentant un signal de télécommande d'extinction généralisée des blocs.

12. Installation selon la revendication 10, caractérisée en ce que lesdits moyens de commande de chaque bloc comportent un processeur (32) pilotant un moyen interrupteur (T₁₀) connecté pour alimenter le modem (34) correspondant en énergie électrique délivrée par ladite ligne (13).

13. Installation selon la revendication 12, caractérisée en ce que ledit processeur (32) est programmé pour piloter le moyen interrupteur (T₁₀) pendant une durée prédéterminée et après un retard prédéterminé spécifique audit bloc, afin que lesdits modems ne soient pas tous alimentés en même temps.
